# EUROPEAN PATENT SPECIFICATION

(11) **EP 3 340 423 B1**
(45) Date of publication and mention of the grant of the patent: **07.02.2024**
(21) Application number: 17208938.5
(22) Date of filing: 20.12.2017
(51) Int. Cl.: H02J 7/00, B64C 39/02, H02J 7/02, H02J 50/10, B60L 53/00, B60L 53/53, B64U 80/86, B64F 1/00, H02J 7/34, H02J 7/35

(54) **ONBOARD CHARGING DEVICE FOR UNMANNED AERIAL VEHICLE AND VEHICLE INCLUDING THE SAME**
BORDEIGENE LADEVORRICHTUNG FÜR UNBEMANNTES LUFTFAHRZEUG UND FAHRZEUG DAMIT
DISPOSITIF DE CHARGEMENT EMBARQUÉ POUR VÉHICULE AÉRIEN SANS PILOTE ET VÉHICULE LE COMPRENANT

(30) Priority: 20.12.2016 CN 201611187863
(43) Date of publication of application: 27.06.2018
(73) Proprietor: Beijing Xiaomi Mobile Software Co., Ltd., Beijing 100085 (CN)
(72) Inventor: XING, Zheng, Beijing, 100085 (CN); LI, Ningning, Beijing, 100085 (CN); ZHANG, Lei, Beijing, 100085 (CN)
(74) Representative: Kudlek, Franz Thomas

(56) References cited:
- WO-A2-2015/195175
- US-A1- 2016 144 982
- US-A1- 2016 244 187
- US-B1- 8 511 606
- KARL ENGELBERT WENZEL ET AL: "Automatic Take Off, Tracking and Landing of a Miniature UAV on a Moving Carrier Vehicle", JOURNAL OF INTELLIGENT AND ROBOTIC SYSTEMS ; THEORY AND APPLICATIONS - (INCORPORATING MECHATRONIC SYSTEMS ENGINEERING), KLUWER ACADEMIC PUBLISHERS, DO, vol. 61, no. 1 - 4, 23 October 2010 (2010-10-23), pages 221-238, XP019855701, ISSN: 1573-0409, DOI: 10.1007/S10846-010-9473-0

## Description

### TECHNICAL FIELD

The present disclosure generally relates to the technical field of unmanned aerial vehicles, and more particularly, to an onboard charging device for an unmanned aerial vehicle and a vehicle.

### BACKGROUND

When an unmanned aerial vehicle executes a photographing task in a remote area such as a suburb, the unmanned aerial vehicle is often required to be charged because of its limited flight duration. In a related technology, there is no reliable landing place for an unmanned aerial vehicle, which brings inconvenience to charging.

US 8511606B1 provides an apparatus, including a platform configured to house a plurality of unmanned aerial vehicles and a number of charging stations configured to charge the plurality of unmanned aerial vehicles. US 2016/244187A1 provides a controller, configured to instruct an unmanned aerial vehicle docket to a landing perch to perform a preflight test operation of a preflight test routine. WO 2015/195175A2 provides a system for facilitating automated landing and takeoff of an autonomous or pilot controlled hovering air vehicle with a cooperative underbody at a stationary or mobile landing place and an automated storage system used in conjunction with the landing and takeoff mechanism that stores and services a plurality of UAVs. US 2016/144982 A1 provides an aerial vehicle docking system, including a landing pad and an aerial vehicle. The document entitled "Automatic Take off, Tracking and Landing of a Miniature UAV on a Moving Carrier Vehicle" provides a system including a miniature unmanned aerial vehicle and a small carrier vehicle, in which the UAV is capable of autonomously starting from the moving ground vehicle, tracking it at a constant distance and landing on a platform on the carrier in motion.

### SUMMARY

Accordingly, the present disclosure provides an onboard charging device for an unmanned aerial vehicle and a vehicle in accordance with claims which follow.

The features of the onboard charging device for an unmanned aerial vehicle and the vehicle according to the present disclosure are defined in the independent claims, and the preferable features according to the present disclosure are defined in the dependent claims.

The technical solutions provided by the embodiments of the present disclosure may achieve the following beneficial effects: the platform configured for the unmanned aerial vehicle to land is arranged on top of the vehicle, so that influence of a factor such as a rugged terrain may be eliminated when the unmanned aerial vehicle lands. Moreover, after landing on the platform, the unmanned aerial vehicle may be directly charged by simple steps through the charging module on the platform.

It should be understood that the above general descriptions and detailed descriptions below are only exemplary and explanatory and not intended to limit the present disclosure.

### BRIEF DESCRIPTION OF THE DRAWINGS

The accompanying drawings, which are incorporated in and constitute a part of this specification, illustrate embodiments consistent with the present disclosure and, together with the description, serve to explain the principles of the present disclosure.
Fig. 1 is a schematic diagram illustrating an onboard charging device for an unmanned aerial vehicle, according to a first exemplary embodiment.
Fig. 2 is an exploded view of an onboard charging device for an unmanned aerial vehicle, according to a first exemplary embodiment.
Fig. 3 is a schematic diagram illustrating a platform of an onboard charging device for an unmanned aerial vehicle in an unfolded state, according to a first exemplary embodiment.
Fig. 4 is a schematic diagram illustrating a platform of an onboard charging device for an unmanned aerial vehicle in a storage state, according to a first exemplary embodiment.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the present disclosure. Instead, they are merely examples of apparatuses and methods consistent with aspects related to the present disclosure as recited in the appended claims.

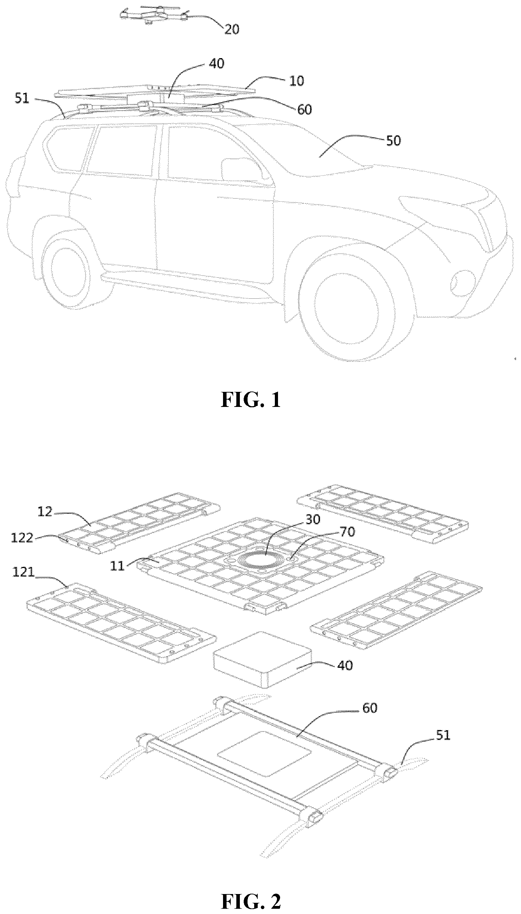

As shown in Fig. 1 to Fig. 4, an exemplary implementation of the present disclosure provides an onboard charging device for an unmanned aerial vehicle (UAV), which includes a platform 10 configured to be mounted on top of a vehicle 50. A charging module 30 is configured to charge the unmanned aerial vehicle 20, where the charging module 30 is arranged on the platform 10. The platform 10 includes a docking station to dock the UAV The charging module 30 may include a charger and related supporting circuit.

In addition, as shown in Fig. 1, the present disclosure further provides a vehicle, the onboard charging device for the unmanned aerial vehicle being mounted on top of the vehicle. In such a manner, on one hand, when the unmanned aerial vehicle 20 executes an aerial photographing task in an environment of a rugged terrain of a suburb and the like, the platform 10 in the onboard charging device for the unmanned aerial vehicle provided by the present disclosure may provide a flat landing site for the unmanned aerial vehicle 20, and influence of an external environment is eliminated, so that a blade and the like of the unmanned aerial vehicle 20 may be prevented from being damaged; and on the other hand, the charging module 30 on the platform 10 may charge the unmanned aerial vehicle 20 to guarantee a flight duration for the unmanned aerial vehicle 20 after the unmanned aerial vehicle 20 lands.

Furthermore, as shown in Fig. 1 and Fig. 2, the charging device may further include a power storage module 40 mounted on the platform 10, and the power storage module 40 is electrically connected with the charging module 30, so that the power storage module 40 may fit with the charging module 30 to provide a current output to the unmanned aerial vehicle 20, wherein the power storage module 40 may be, for example, a storage battery.

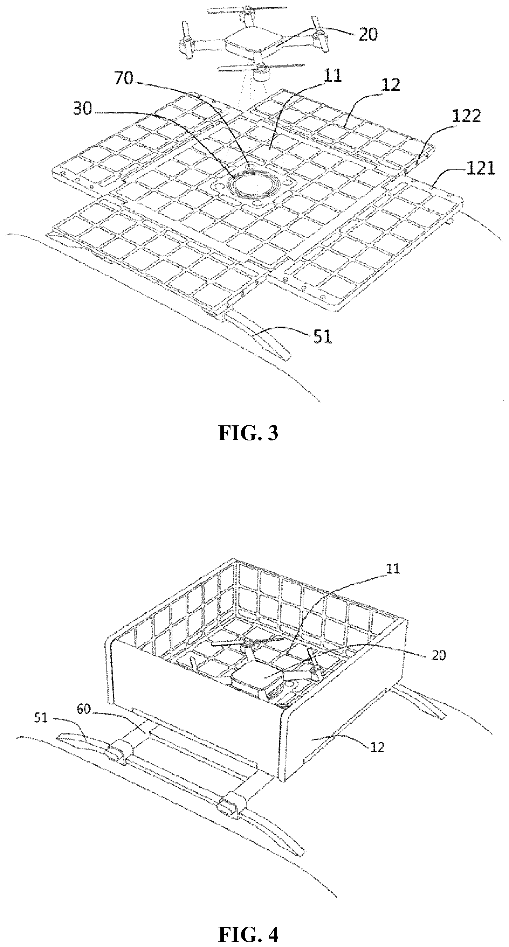

As shown in Fig. 2 and Fig. 3, the charging module 30 is formed on the platform 10, and an upper surface is flush with the platform 10 to avoid interference and influence on landing of the unmanned aerial vehicle 20. The charging module 30 may provide a wired output for the unmanned aerial vehicle in a form of plug connection fit and the like with the unmanned aerial vehicle 20, and may also provide a wireless output for the unmanned aerial vehicle in a wireless charging form.

For example, in an implementation of the present disclosure, the charging module 30 may be a wireless charging module. When the unmanned aerial vehicle 20 is charged, the wireless charging module may perform electric signal interaction with the power storage module 40 firstly and then wirelessly output electric power to a battery of the unmanned aerial vehicle 20. The form for wireless charging is well known by those skilled in the art, and will not be elaborated herein. For example, the wireless charging module may adopt a form such as an electromagnetic sensing form, a magnetic resonance form or a radio wave form. Under such a condition, when the unmanned aerial vehicle 20 is charged, it is only necessary to make the unmanned aerial vehicle 20 land on the platform 10 and position it within an operation range of the wireless charging module. Such a charging process may complete charging without manual intervention, and is convenient to operate.

Furthermore, the wireless charging module may include: a receiving unit, configured to receive power information of the unmanned aerial vehicle; a determination unit, configured to determine whether the unmanned aerial vehicle has low power or not; and a charging unit, configured to charge the unmanned aerial vehicle when the unmanned aerial vehicle has low power. In such a manner, after the unmanned aerial vehicle 20 lands, the charging device provided by the present disclosure may automatically detect that the unmanned aerial vehicle 20 has insufficient power using the receiving module and automatically enter a charging state to recover a flight duration of the unmanned aerial vehicle 20 within a short time; and moreover, after the unmanned aerial vehicle 20 is completely charged, the judgment module determines that the unmanned aerial vehicle 20 has sufficient power, and the charging device may automatically stop the charging process.

In an implementation of the present disclosure, the platform 10 may be a solar panel, and the solar panel is electrically connected with the power storage module 40 to store solar energy in the power storage module 40, thereby timely supplying electric power to the power storage module 40 by virtue of a sufficient solar energy resource. Such a power supply manner is energy-saving and environmentally-friendly.

In addition, the platform 10 includes a bottom plate 11 and side plates 12 pivoted to edges of the bottom plate 11. As shown in Fig. 3 and Fig. 4, the bottom plate 11 is a tetragon, and there are four side plates 12 pivoted to the four edges of the bottom plate 11 respectively. In such a manner, the platform 10 is endowed with an unfolded state and a storage state. In the unfolded state, the side plates 12 are parallel to the bottom plate 11; and in the storage state, the side plates 12 pivot upwards to form a groove structure capable of accommodating the unmanned aerial vehicle. As shown in Fig. 4, the four side plates 12 enclose a closed annular structure in the storage state. There are no specific limits made to specific shapes of the bottom plate 11 and the side plates 12.

In an embodiment not according to the invention as claimed, the bottom plate 11 may also be another polygon, irregular pattern and the like, and the side plates 12 may be other corresponding shapes. In the unfolded state, the platform 10 may provide a relatively large landing space for the unmanned aerial vehicle 20, and moreover, when the bottom plate 11 and the side plates 12 are solar panels respectively, the solar energy may be maximally collected in such a state. In the storage state, the platform 10 accommodates the unmanned aerial vehicle 20 in an enclosing manner, which is convenient and rapid. This may eliminate influence of wind power and the like caused by running of a vehicle on the unmanned aerial vehicle 20 and may also prevent a limited space in the vehicle from being occupied. In addition, since the unmanned aerial vehicle 20 usually lands above the charging module 30 for charging, the charging module 30 may be arranged in the center of the bottom plate 11. In such a manner, the unmanned aerial vehicle 20 may be not damaged by overturning of the side plates 12 when landing on the bottom plate 11. The bottom plate 11 may further include locking mechanism to lock the UAV in a fixed position while charging.

The charging device further includes a driving mechanism configured to drive the side plates 12 to pivot relative to the bottom plate 11 to endow the platform with the unfolded state and the storage state. For example, in an implementation, the bottom plate 11 is connected with the side plates 12 through rotating shafts, and the driving mechanism may include a motor capable of driving the rotating shafts and a controller for controlling the motor, a wireless signal receiving module being arranged in the controller. An operator may control rotation of the rotating shafts to unfold or overturn upwards the side plates 12 by means of operating the controller through a mobile terminal. The mobile terminal may be, for example, a remote controller or a smart phone. An operating signal is sent to the controller through the remote controller or the smart phone, and after the wireless signal receiving module receives the operating signal, the motor may be controlled to be started, thereby implementing movements of the side plates 12.

In order to enable the side plates 12 in the storage state to form the closed annular structure, splicing structures may be arranged between every two adjacent side plates 12. For example, as shown in Fig. 3, an inserted block 121 is arranged on an edge of an upper end face of one side plate 12, and a slot 122 is formed in a side end face of the other adjacent side plate 12. In the storage state, the inserted block 121 may mate with the slot 122, thereby enabling the annular structure formed by the side plates 12 to be stable.

In addition, as shown in Fig. 2 and Fig. 3, positioning sensors 70 configured to guide the unmanned aerial vehicle 20 to land are arranged on the platform 10. For example, when the platform 10 is an overturning structure, the positioning sensors 70 are arranged on the bottom plate 11 and are basically positioned in the center of the bottom plate 11 to prevent the unmanned aerial vehicle 20 from being damaged when the side plates 12 are overturned. The positioning sensors 70 fits with a sensor on the unmanned aerial vehicle 20 to enable the unmanned aerial vehicle to accurately land on the platform 10. For example, the positioning sensors 70 may send infrared or photoelectric signals and the like and fit with an optical flow sensor on the unmanned aerial vehicle 20, and the optical flow sensor may recognize positions of the positioning sensors 70, such that the unmanned aerial vehicle 20 may accurately land on the platform 10. Under such a condition, the positioning sensors 70 are arranged around the charging module 30, and in such a manner, the unmanned aerial vehicle 20 may land in an area enclosed by the positioning sensors 70, namely positioned above the charging module 30, so that the unmanned aerial vehicle 20 may be conveniently charged by the charging module 30.

As mentioned above, the present disclosure further provides a vehicle 50 including a vehicle top. The onboard charging device for the unmanned aerial vehicle may be mounted on the vehicle top. The vehicle 50 may serve as a mobile charging device for the unmanned aerial vehicle 20, and may provide a rising and landing platform for the unmanned aerial vehicle 20.

Furthermore, as shown in Fig. 1 and Fig. 2, the vehicle 50 includes top luggage racks 51, and the platform 10 may be detachably mounted on the top luggage racks 51 through a bracket 60, so that overall stability of the charging device and convenience for operation of a user may be ensured. For example, in an implementation, the bracket 60 may include a pair of beams crossing the two top luggage racks 51 and a base plate positioned between the two beams, and the platform 10 may be mounted on the base plate in form of clamping, threaded connection or the like.

Other embodiments of the present disclosure will be apparent to those skilled in the art from consideration of the specification and practice of the present disclosure. This application is intended to cover any variations, uses, or adaptations of the present disclosure following the general principles thereof and including such departures from the present disclosure as come within known or customary practice in the art. It is intended that the specification and examples be considered as exemplary only, with a true scope and spirit of the present disclosure being indicated by the following claims.

It will be appreciated that the present disclosure is not limited to the exact construction that has been described above and illustrated in the accompanying drawings, and that various modifications and changes may be made without departing from the scope thereof. It is intended that the scope of the present disclosure only be limited by the appended claims.

## Claims

1. An onboard charging device for an unmanned aerial vehicle, comprising:
a platform (10) configured to be mounted on top of a vehicle (50) and comprising a bottom plate (11); and
a charging module (30) disposed on the platform (10) and configured to charge the unmanned aerial vehicle (20);
wherein the bottom plate (11) comprises a locking mechanism configured to lock the unmanned aerial vehicle in a fixed position while charging;
**characterized in that**, the platform (10) further comprises side plates (12) pivoted to edges of the bottom plate (11), the bottom plate (11) is a tetragon, and the side plates (12) are four side plates pivoted to the four edges of the bottom plate (11) respectively, wherein the platform (10) has an unfolded state and a storage state, the four side plates (12) enclosing a closed annular structure in the storage state; and
wherein positioning sensors (70) are arranged around the charging module (30) on the platform (10) and configured to guide the unmanned aerial vehicle (20) to land, and the positioning sensors (70) are arranged on the bottom plate (11) and positioned in the center of the bottom plate (11).

2. The onboard charging device for the unmanned aerial vehicle of claim 1, further comprising a power storage module (40) mounted on the platform (10), wherein the power storage module (40) is electrically connected with the charging module (30).

3. The onboard charging device for the unmanned aerial vehicle of claim 1 or 2, wherein the charging module (3) comprises a wireless charging module.

4. The onboard charging device for the unmanned aerial vehicle of claim 3, wherein the wireless charging module comprises:
a receiving unit, configured to receive power information of the unmanned aerial vehicle;
a determination unit, configured to determine whether the unmanned aerial vehicle has low power or not; and
a charging unit, configured to charge the unmanned aerial vehicle when the unmanned aerial vehicle has low power.

5. The onboard charging device for the unmanned aerial vehicle of claim 2, wherein the platform (10) comprises a solar panel, and the solar panel is electrically connected with the power storage module (40).

6. The onboard charging device for the unmanned aerial vehicle of claim 1 or 5, wherein the onboard charging device further comprises a driving mechanism configured to switch the platform from the unfolded state to the storage state by moving at least one of the side plates (12).

7. The onboard charging device for the unmanned aerial vehicle of claim 1 or 5, wherein the onboard charging device further comprises a driving mechanism configured to drive the side plates (12) to pivot relative to the bottom plate (11) to endow the platform (10) with the unfolded state and the storage state, the side plates (12) are parallel to the bottom plate (11) in the unfolded state, and the side plates (12) pivot upwards to form a groove structure capable of accommodating the unmanned aerial vehicle in the storage state.

8. The onboard charging device for the unmanned aerial vehicle of claim 7, wherein the driving mechanism comprises a motor and a controller for controlling the motor, and a wireless signal receiving module is arranged in the controller.

9. A vehicle (50), comprising:
a vehicle top; and
the onboard charging device for the unmanned aerial vehicle of any one of claims 1-8 mounted on the vehicle top.

10. The vehicle (50) of claim 9, comprising top luggage racks (51), wherein the platform (10) is detachably mounted on the top luggage racks (51) through a bracket (60).

11. The vehicle (50) of claim 10, wherein the charging module (3) comprises a wireless charging module.

12. The vehicle (50) of claim 11, wherein the wireless charging module comprises:
a receiving unit, configured to receive power information of the unmanned aerial vehicle;
a determination unit, configured to determine whether the unmanned aerial vehicle has low power or not; and
a charging unit, configured to charge the unmanned aerial vehicle when the unmanned aerial vehicle has low power.

## Patentansprüche

1. Eine bordeigene bzw.- On-Board- Ladevorrichtung für ein unbemanntes Luftfahrzeug, umfassend:
eine Plattform (10), die so konfiguriert ist, dass sie oben auf einem Fahrzeug (50) montiert werden kann und eine Bodenplatte (11) umfasst; und
ein Lademodul (30), das auf der Plattform (10) angeordnet und zum Aufladen des unbemannten Luftfahrzeugs (20) konfiguriert ist;
wobei die Bodenplatte (11) einen Verriegelungsmechanismus umfasst, der so konfiguriert ist, dass er das unbemannte Luftfahrzeug während des Aufladens in einer festen Position verriegelt;
**dadurch gekennzeichnet, dass** die Plattform (10) ferner Seitenplatten (12) umfasst, die an den Kanten der Bodenplatte (11) schwenkbar angebracht sind, wobei die Bodenplatte (11) ein Tetragon ist und die Seitenplatten (12) vier Seitenplatten sind, die jeweils an den vier Kanten der Bodenplatte (11) schwenkbar angebracht sind, wobei die Plattform (10) einen aufgeklappten Zustand und einen Lagerungszustand aufweist, wobei die vier Seitenplatten (12) im Lagerungszustand eine geschlossene ringförmige Struktur einschließen; und
wobei Positionierungssensoren (70) um das Lademodul (30) herum auf der Plattform (10) angeordnet sind und so konfiguriert sind, dass sie das unbemannte Luftfahrzeug (20) zur Landung führen, und die Positionierungssensoren (70) auf der Bodenplatte (11) angeordnet und in der Mitte der Bodenplatte (11) positioniert sind .

2. Die bordeigene Ladevorrichtung für ein unbemanntes Luftfahrzeug nach Anspruch 1, ferner umfassend ein Energiespeichermodul (40), das auf der Plattform (10) montiert ist, wobei das Energiespeichermodul (40) elektrisch mit dem Lademodul (30) verbunden ist.

3. Die bordeigene Ladevorrichtung für ein unbemanntes Luftfahrzeug nach Anspruch 1 oder 2, wobei das Lademodul (3) ein drahtloses Lademodul umfasst.

4. Die bordseitige Ladevorrichtung für ein unbemanntes Luftfahrzeug nach Anspruch 3, wobei das drahtlose Lademodul umfasst:
eine Empfangseinheit, die so konfiguriert ist, dass sie Leistungsinformationen des unbemannten Luftfahrzeugs empfängt;
eine Bestimmungseinheit, die so konfiguriert ist, dass sie feststellt, ob das unbemannte Luftfahrzeug mit niedriger Leistung hat oder nicht; und
eine Ladeeinheit, die so konfiguriert ist, dass sie das unbemannte Luftfahrzeug auflädt, wenn das unbemannte Luftfahrzeug eine geringe Leistung hat.

5. Die bordeigene Ladevorrichtung für ein unbemanntes Luftfahrzeug nach Anspruch 2, wobei die Plattform (10) ein Solarpanel umfasst und das Solarpanel elektrisch mit dem Energiespeichermodul (40) verbunden ist.

6. Die bordeigene Ladevorrichtung für ein unbemanntes Luftfahrzeug nach Anspruch 1 oder 5, , wobei die bordseitige Ladevorrichtung ferner einen Antriebsmechanismus umfasst, der so konfiguriert ist, dass er die Plattform durch Bewegen mindestens einer der Seitenplatten (12) aus dem ausgeklappten Zustand in den Lagerungszustand schaltet.

7. Die bordeigene Ladevorrichtung für ein unbemanntes Luftfahrzeug nach Anspruch 1 oder 5, wobei die bordeigene Ladevorrichtung ferner einen Antriebsmechanismus umfasst, der so konfiguriert ist, dass er die Seitenplatten (12) so antreibt, dass sie relativ zur Bodenplatte (11) schwenken, um die Plattform (10) mit dem ausgeklappten Zustand und dem Lagerungszustand auszustatten, wobei die Seitenplatten (12) im ausgeklappten Zustand parallel zur Bodenplatte (11) sind und die Seitenplatten (12) nach oben schwenken, um eine Nutenstruktur zu bilden, die das unbemannte Luftfahrzeug im Lagerungszustand aufnehmen kann.

8. Die bordeigene Ladevorrichtung für ein unbemanntes Luftfahrzeug nach Anspruch 7, wobei der Antriebsmechanismus einen Motor und eine Steuerung zur Steuerung des Motors umfasst und in der Steuerung ein drahtloses Signalempfangsmodul angeordnet ist.

9. Ein Fahrzeug (50), umfassend:
ein Fahrzeugverdeck; und
die bordeigene Ladevorrichtung für ein unbemanntes Luftfahrzeug nach einem der Ansprüche 1-8, die auf dem Fahrzeugdach montiert ist.

10. Fahrzeug (50) nach Anspruch 9, das obere Gepäckträger (51) umfasst, wobei die Plattform (10) über eine Halterung (60) abnehmbar an den oberen Gepäckträgern (51) angebracht ist.

11. Fahrzeug (50) nach Anspruch 10, wobei das Lademodul (3) ein drahtloses Lademodul umfasst.

12. Fahrzeug (50) nach Anspruch 11, wobei das drahtlose Lademodul umfasst:
eine Empfangseinheit, die so konfiguriert ist, dass sie Leistungsinformationen des unbemannten Luftfahrzeugs empfängt;
eine Bestimmungseinheit, die so konfiguriert ist, dass sie bestimmt, ob das unbemannte Luftfahrzeug eine geringe Leistung hat oder nicht; und
eine Ladeeinheit, die so konfiguriert ist, dass sie das unbemannte Luftfahrzeug auflädt, wenn das unbemannte Luftfahrzeug wenig Energie hat.

## Revendications

1. Un dispositif de charge embarqué pour un véhicule aérien sans pilote, comprenant :
une plate-forme (10) configurée pour être montée sur le dessus d'un véhicule (50) et comprenant une plaque inférieure (11) ; et
un module de charge (30) disposé sur la plate-forme (10) et configuré pour charger le véhicule aérien sans pilote (20) ;
dans lequel la plaque inférieure (11) comprend un mécanisme de verrouillage configuré pour bloquer le véhicule aérien sans pilote dans une position fixe pendant le chargement ;
**caractérisée en ce que** la plate-forme (10) comprend en outre des plaques latérales (12) pivotées sur les bords de la plaque inférieure (11), la plaque inférieure (11) est un tétragone, et les plaques latérales (12) sont quatre plaques latérales pivotées sur les quatre bords de la plaque inférieure (11) respectivement, dans laquelle la plate-forme (10) a un état déplié et un état de stockage, les quatre plaques latérales (12) enfermant une structure annulaire fermée dans l'état de stockage ; et
dans lequel les capteurs de positionnement (70) sont disposés autour du module de charge (30) sur la plate-forme (10) et configurés pour guider le véhicule aérien sans pilote (20) vers l'atterrissage, et les capteurs de positionnement (70) sont disposés sur la plaque de fond (11) et positionnés au centre de la plaque de fond (11) .

2. Le dispositif de charge embarqué pour un véhicule aérien sans pilote de la revendication 1, comprenant en outre un module de stockage d'énergie (40) monté sur la plate-forme (10), dans lequel le module de stockage d'énergie (40) est connecté électriquement au module de charge (30).

3. Le dispositif de charge embarqué pour un véhicule aérien sans pilote de la revendication 1 ou 2, dans lequel le module de charge (3) comprend un module de charge sans fil.

4. Le dispositif de charge embarqué pour un véhicule aérien sans pilote de la revendication 3, dans lequel le module de charge sans fil comprend :
une unité de réception, configurée pour recevoir des informations sur la puissance du véhicule aérien sans pilote ;
une unité de détermination, configurée pour déterminer si le véhicule aérien sans pilote dispose ou non de low power ; et
une unité de charge, configurée pour charger le véhicule aérien sans pilote lorsque le véhicule aérien sans pilote a une faible puissance .

5. Le dispositif de charge embarqué pour un véhicule aérien sans pilote de la revendication 2, dans lequel la plate-forme (10) comprend un panneau solaire, et le panneau solaire est électriquement connecté au module de stockage d'énergie (40).

6. Le dispositif de charge embarqué pour un véhicule aérien sans pilote de la revendication 1 ou 5, dans lequel le dispositif de charge embarqué comprend en outre un mécanisme d'entraînement configuré pour faire passer la plate-forme de l'état déplié à l'état de stockage en déplaçant au moins l'une des plaques latérales (12) .

7. Le dispositif de charge embarqué pour un véhicule aérien sans pilote de la revendication 1 ou 5, dans lequel le dispositif de charge embarqué comprend en outre un mécanisme d'entraînement configuré pour entraîner les plaques latérales (12) à pivoter par rapport à la plaque inférieure (11) pour doter la plate-forme (10) de l'état déplié et de l'état de stockage, les plaques latérales (12) sont parallèles à la plaque inférieure (11) à l'état déplié, et les plaques latérales (12) pivotent vers le haut pour former une structure de rainure capable d'accueillir le véhicule aérien sans pilote à l'état de stockage.

8. Le dispositif de recharge embarqué pour un véhicule aérien sans pilote de la revendication 7, dans lequel le mécanisme d'entraînement comprend un moteur et un contrôleur pour commander le moteur, et un module de réception de signaux sans fil est disposé dans le contrôleur.

9. Véhicule (50) comprenant
un toit de véhicule ; et
le dispositif de charge embarqué pour un véhicule aérien sans pilote de l'une des revendications 1 à 8, monté sur le toit du véhicule.

10. Le véhicule (50) de la revendication 9, comprenant des porte-bagages supérieurs (51), dans lequel la plate-forme (10) est montée de manière amovible sur les porte-bagages supérieurs (51) par l'intermédiaire d'un support (60).

11. Le véhicule (50) de la revendication 10, dans lequel le module de charge (3) comprend un module de charge sans fil.

12. Le véhicule (50) de la revendication 11, dans lequel le module de charge sans fil comprend :
une unité de réception, configurée pour recevoir des informations sur la puissance du véhicule aérien sans pilote ;
une unité de détermination, configurée pour déterminer si le véhicule aérien sans pilote a une faible puissance ou non ; et
une unité de charge, configurée pour charger le véhicule aérien sans pilote lorsque celui-ci a une faible puissance.
